# EUROPEAN PATENT APPLICATION

(11) **EP 3 454 085 A1**
(43) Date of publication of application: **13.03.2019**
(21) Application number: 18187902.4
(22) Date of filing: 08.08.2018
(51) Int. Cl.: G01S 17/42, G01S 7/481

(54) **OPTICAL SCANNING DEVICE**

(30) Priority: 12.09.2017 JP 2017174995
(71) Applicant: Shinano Kenshi Kabushiki Kaisha, Nagano 386-0498 (JP)
(72) Inventor: MARUYAMA, Nobuchika, Ueda-shi,, Nagano 386-0498 (JP)
(74) Representative: Mewburn Ellis LLP

(57) **Abstract**

There is provided an optical scanning device which is reduced in size by flattening the device in the axial direction thereof and in which optical components at the light projection side and at the light reception side are attached in a compact manner.

Light radiated from a light emitting portion (7) travels to a reflection mirror (6) in parallel along an axial direction and is then reflected by the reflection mirror (6) and projected toward outside in a radial direction of a rotor (2), reflected light reflected from an irradiated object and traveling toward inside in the radial direction of the rotor (2) is reflected by the reflection mirror (6) in the axial direction toward inside a hollow space (S) of a rotor shaft (3) for light reception, and at least one of optical components for light projection and for light reception is located in the hollow space (S) of the rotor shaft (3).

## Description

### Technical Field

The present invention relates to an optical scanning device that projects, for example, laser light radiated from a light source onto a surrounding portion and receives reflected light.

### Background Art

To realize automated driving of, for example, vehicles, a technique to perform driving control while determining surrounding conditions of a running vehicle (the presence of, for example, a pedestrian, another vehicle, or an obstacle) is being developed.

In this case, a sensor serving as the eyes of a vehicle instead of a driver is used. This sensor includes the following types of sensors put into practical use as an anticollision system. For example, such types of sensors include a millimeter-wave radar type using millimeter waves as radio waves to be radiated, an infrared laser type with a ranging property increased by radiation of infrared lasers, a camera type equipped with a camera to recognize an obstacle with image recognition, and a type using these types in combination.

In a case where such a sensor is mounted in a vehicle, if the sensor has a large height, it becomes difficult to mount the sensor on the vehicle and the designability also decreases. Moreover, if the number of sensors which are provided at a plurality of places becomes large, the designability is affected and a higher cost is incurred.

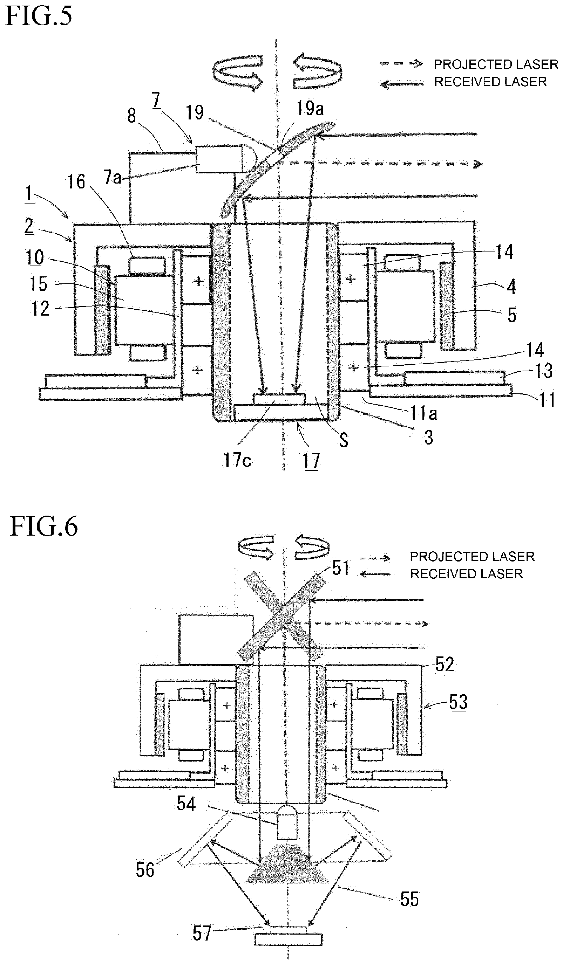

For example, as in an optical scanning device illustrated in Fig. 6, when a motor 53, in which a reflection mirror 51 is attached to a rotor yoke 52, and optical components (for example, a light projection portion 54, reflection lenses 55, 56, and a light receiving element 57) are arranged in series in the axial direction, the device increases in size and becomes difficult to mount, and the designability also decreases. To solve such a defect, an optical scanning device reduced in size by attaching a collimator lens with the inside of a hollow rotor shaft inserted into a bearing housing of a stator used as an optical path, attaching a semiconductor laser to a stator, and locating a light deflection element at a rotor has been proposed (PTL 1: Japanese Patent No. 2690591).

### Summary of Invention

### Technical Problem

In promoting fully automated driving of vehicles, sensing becomes necessary around 360 degrees, and a reduction in number of sensors is also desired to restrain manufacturing costs. Moreover, a sensor device reduced in size and weight without impairment of the designability and without rotation unevenness is desired as it is attached as a vehicle component. Moreover, while the optical scanning device proposed in PTL 1 has a configuration to perform scanning by projecting laser light, PTL 1 has no disclosure about an optical component which receives reflected light from, for example, an object.

### Solution to Problem

The present invention has been accomplished to solve these problems, and an aim thereof is to provide an optical scanning device which is reduced in size by flattening the device in the axial direction thereof and in which optical components at the light projection side and at the light reception side are attached in a compact manner.

The present invention has the following configuration to attain the above object.

An optical scanning device includes a motor including a rotor which has a rotor shaft with a hollow structure and in which a reflection mirror having a reflection surface is integrally attached to a rotation center portion of a rotor yoke, and a stator which includes a bearing housing that pivotally supports the rotor shaft in such a way as to allow the rotor shaft to rotate, and optical components including a light source, a light emitting portion that radiates laser light from the light source onto the reflection mirror in an axial direction with a hollow space of the rotor shaft used as an optical path and projects reflected light toward outside in a radial direction of the rotor, and a light receiving portion that causes reflected light reflected from an irradiated object and traveling toward inside in the radial direction of the rotor to be reflected by the reflection mirror in the axial direction and focuses the reflected light on a light receiving element with the hollow space of the rotor shaft used as an optical path, wherein at least one of the optical components is located in the hollow space of the rotor shaft.

With the above configuration employed, the inside of the hollow space of the rotor shaft is used as optical paths for light projection and for light reception and at least one of the optical components is located in the hollow space of the rotor shaft, so that a reduction in size of the device can be attained by performing flattening in the axial direction and attaching the optical components in a compact manner.

It is favorable that the light emitting portion is provided at a rotation center of the hollow space of the rotor shaft while light from the light emitting portion in directions other than a light projection direction of the light source is blocked by a light blocking member.

With this, since light from the light source is blocked in directions other than the light projection direction by the light blocking member inside the hollow space of the rotor shaft, projected light and received light can be prevented from interfering with each other, so that the sensitivity of sensing can be maintained.

The light receiving portion, which includes a light collection lens that collects reflection reflected by the reflection mirror and a light receiving element on which an image is formed by the light collection lens, can be provided in the hollow space of the rotor shaft. With this, since not only the light emitting portion but also the light receiving portion is housed in the hollow space of the rotor shaft, a reduction in size can be promoted by attaching the optical components in a compact manner within the range of the height in the axial direction of the motor.

The light emitting portion can be attached integrally with the rotor yoke in conjunction with a curved lens, and the light receiving portion can be located in the hollow space of the rotor shaft.

This enables causing light to be projected from the light emitting portion toward outside in the radial direction of the rotor, causing reflected light to be reflected by the curved lens in the axial direction, and focusing the reflected light on the light receiving portion provided in the hollow space of the rotor shaft. Accordingly, since an optical path leading from light projection to light reception becomes short, the optical scanning device is unlikely to be affected by disturbance, so that the detection accuracy thereof is improved. Moreover, even if a light blocking member is not provided, such a phenomenon that projected light and received light interfere with each other can be avoided.

The reflection mirror can be supported in such a way as to be able to swing around a swinging shaft. This enables widening a scanning range not only in the radial direction but also in the axial direction by performing scanning of projected light radiated from the light source in the axial direction.

The radiation angle of the light source of the light emitting portion can be made variable, and a tilt mirror having a plurality of reflection surfaces with respective different tilt angles can be attached to the rotor yoke of the motor in such a way as to be able to rotate.

This enables causing projected light radiated from the light source to be reflected by the reflection surfaces and performing scanning of the projected light in the radial direction and the axial direction by rotationally driving the tilt mirror with, for example, a motor driving force transmitted thereto.

### Advantageous Effects of Invention

As described above, an optical scanning device which is reduced in size by flattening the device in the axial direction thereof and in which optical components at the light projection side and at the light reception side are attached in a compact manner can be provided.

### Brief Description of Drawings

Fig. 1 is a sectional view in an axial direction of an optical scanning device according to a first embodiment.
Fig. 2 is a sectional view in an axial direction of an optical scanning device according to a second embodiment.
Fig. 3 is a sectional view in an axial direction of an optical scanning device according to a third embodiment.
Fig. 4 is a sectional view in an axial direction of an optical scanning device according to a fourth embodiment.
Fig. 5 is a sectional view in an axial direction of an optical scanning device according to a fifth embodiment.
Fig. 6 is a sectional view in an axial direction of an optical scanning device according to an example of related art.

### Description of Embodiments

### [First Embodiment]

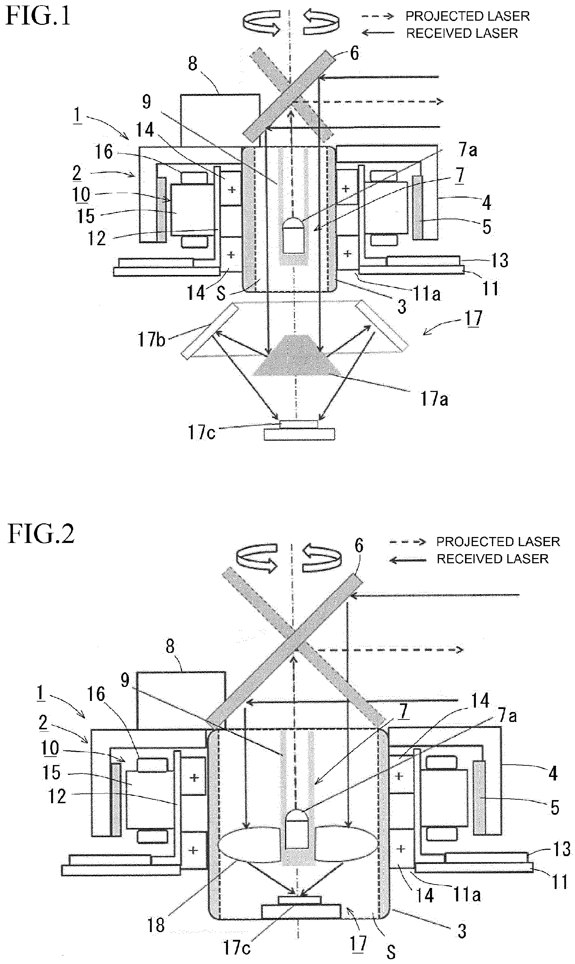

Hereinafter, an optical scanning device according to a first embodiment is described with reference to Fig. 1. Furthermore, the optical scanning device is used as a vehicle-mounted device, and integrally includes a motor and optical components including a light emitting portion and a light receiving portion.

As illustrated in Fig. 1, a DC brushless motor 1 of the outer rotor type is used as a driving motor. A rotor 2 has a rotor shaft 3 of the hollow structure. The rotor shaft 3 is made from, for example, SUS (stainless steel) or S45C (mechanical structural carbon steel). A cup-shaped rotor yoke 4 is integrally attached to the axial end of the rotor shaft 3. Rotor magnets 5 magnetized alternately with N poles and S poles in the circumferential direction are integrally attached to the inner circumferential surface of the rotor yoke 4. A fixing component 8, which fixes a reflection mirror 6 described below, is integrally attached to the upper surface portion of the rotor yoke 4.

Moreover, the reflection mirror 6 is integrally attached to the rotation center portion of the rotor yoke 4 (above the axial end of the rotor shaft 3). Specifically, the reflection mirror 6 is integrally supported by the fixing component 8, which is fixed to the upper surface portion of the rotor yoke 4 with, for example, screws. The reflection mirror 6 is bonded by the fixing component 8 with an inclination of 45° relative to the vertical axis and supported and fixed by an elastic member, and rotates in an integrated manner with the rotor yoke 4.

A light emitting portion 7, which radiates laser light from a light source 7a onto the reflection mirror 6 and radiates reflected light toward outside in the radial direction of the rotor 2, is provided inside the rotor shaft 3. Specifically, the inside of a hollow space S of the rotor shaft 3 is used as optical paths for light emission and for light reception, and providing the light emitting portion 7 in the hollow space S enables achieving flattening in the axial direction and attaining a reduction in size by attaching the optical components in a compact manner. Furthermore, the light emitting portion 7 is not only a single light source but can be a light source configured with a plurality of light sources 7a arranged in an array manner and having respective different radiation angles.

The light emitting portion 7 includes, for example, a laser light source 7a which radiates infrared laser, and is located at the rotation center of the hollow space S of the rotor shaft 3. Light from the light source 7a in directions other than the light projection direction is blocked by a light blocking member 9. The light blocking member 9 is formed from a bottomed tubular body made from resin or metal, and is integrally attached to the inner circumferential wall of the rotor shaft 3 with, for example, a plurality of beams radially extending from the outer circumferential surface thereof. Laser light radiated from the light source 7a upward in the vertical direction inside the rotor shaft 3 is reflected by the reflection mirror 6 and is then projected toward outside in the radial direction of the rotor 2.

With this, laser light radiated from the light source 7a travels toward the reflection mirror 6 in parallel along the axial direction while being subjected to light blocking by the light blocking member 9, and is then reflected by the reflection mirror 6 and projected toward outside in the radial direction of the rotor 2. Moreover, reflected light reflected from an irradiated object and advancing toward inside in the radial direction of the rotor 2 is caused by the reflection mirror 6 to travel in the hollow space S of the rotor shaft 3 in the axial direction for light reception. Specifically, reflected light from the object is reflected by the reflection mirror 6 and is then received by a light receiving portion 17, which is located below the rotor shaft 3 in the vertical direction, via the hollow space S between the inner wall of the rotor shaft 3 and the outer wall of the light blocking member 9 used as an optical path. With this, projected light and received light are prevented by the light blocking member 9 from interfering with each other inside the hollow space S of the rotor shaft 3, so that the sensitivity of sensing can be maintained.

Moreover, in a stator 10, each of a bearing housing 12 and a motor substrate 13 is supported at the periphery of a base portion 11, in which a through-hole 11a larger in diameter than the rotor shaft 3 is provided at the center portion thereof. The rotor shaft 3 is supported in such a way as to be able to rotate via a pair of bearing portions 14 at the inner circumferential surface of the bearing housing 12, which is of a tubular shape. Moreover, a stator core 15 is integrally attached to the outer circumferential surface of the bearing housing 12. The stator core 15 has pole teeth formed in such a way as to protrude toward outside in the radial direction from an annular portion thereof, and a coil 16 is wound around each pole tooth. Forefront surfaces (magnetic flux operation surfaces) of the pole teeth are arranged opposite the rotor magnets 5.

Moreover, reflected light received toward inside in the radial direction of the rotor 2 is reflected by the reflection mirror 6, then advances downward in the vertical direction from the upper end of the rotor shaft 3, and exits from the lower end of the rotor shaft 3. The light receiving portion 17, which receives reflected light passing through the hollow space S, is provided in a space below the rotor shaft 3. The light receiving portion 17 includes a lens 17a and a lens 17b, which reflect the reflected light exiting from the rotor shaft 3, and a light receiving element 17c.

In this way, when the motor 1 is started, the reflection mirror 6 also rotates together with the rotor 2, laser light radiated from the light source 7a, which is provided inside the rotor shaft 3, is reflected by the reflection mirror 6 and radiated toward outside in the radial direction of the rotor 2 around 360°. Moreover, reflected light from an irradiated body such as an object passes through the inside of the hollow space S of the rotor shaft 3 via the reflection mirror 6 and is then focused on the light receiving element 17c of the light receiving portion 17, so that the presence or absence of the irradiated object is detected.

### [Second Embodiment]

Next, another example of the optical scanning device is described with reference to Fig. 2. The same members as those in the first embodiment are assigned the respective same reference numbers and the description thereof is quoted herein.

In the present embodiment, not only the light emitting portion 7 but also a light collection lens 18, which is located around the light emitting portion 7 and collects received light reflected by the reflection mirror 6, and a light receiving portion 17 including a light receiving element 17c, on which an image is formed by the light collection lens 18, are provided in the hollow space of the rotor shaft 3.

With this, since not only the light emitting portion 7 but also the light receiving portion 17 is housed in the hollow space of the rotor shaft 3, a reduction in size can be promoted by attaching the optical components in a compact manner within the range of the height in the axial direction of the motor.

### [Third Embodiment]

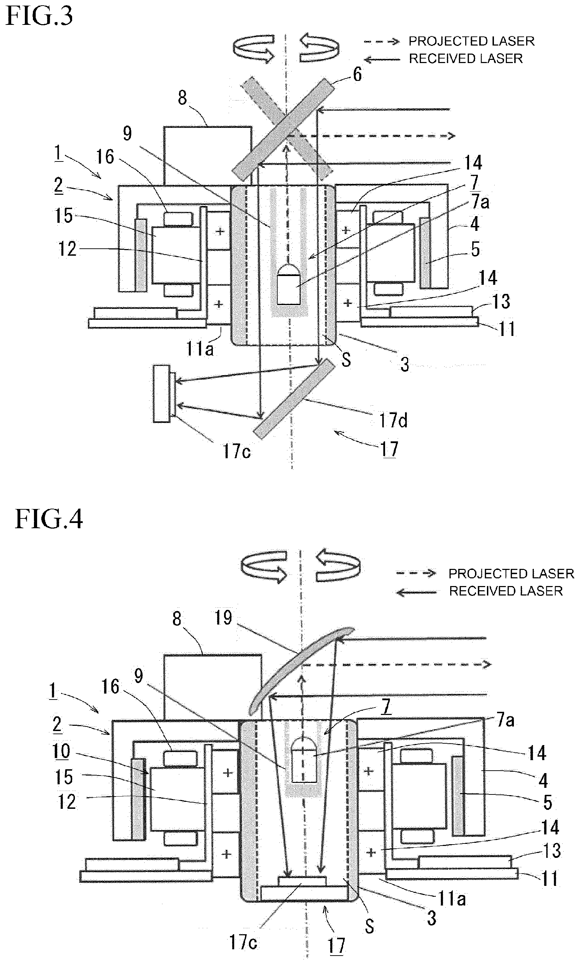

Next, another example of the optical scanning device is described with reference to Fig. 3. The same members as those in the first embodiment are assigned the respective same reference numbers and the description thereof is quoted herein.

The present embodiment is similar to the first embodiment in that the light emitting portion 7, light from which in directions other than the light projection direction is blocked by the light blocking member 9, is provided in the hollow space of the rotor shaft 3. A difference in configuration is concerning a configuration of the light receiving portion 17, which is provided below the rotor shaft 3 in the vertical direction.

The light receiving portion 17 is configured with a reflection mirror 17d (or a lens such as a prism), which is provided at the lower end portion of the rotor shaft 3, and a light receiving element 17c, on which the reflected light is focused. The reflection mirror 17d is configured to reflect reflected light passing through the rotor shaft 3 toward outside in the radial direction at an angle of 45° and to focus the reflected light on the light receiving element 17c.

Even with the above configuration employed, the inside of the hollow space of the rotor shaft 3 is used as optical paths for light projection and for light reception and the light emitting portion 7 is located in the hollow space, so that flattening in the axial direction is achieved and a reduction in size can be attained by attaching the optical components in a compact manner.

### [Fourth Embodiment]

Next, another example of the optical scanning device is described with reference to Fig. 4. The same members as those in the first embodiment are assigned the respective same reference numbers and the description thereof is quoted herein.

In the present embodiment, not only the light source 7a, which configures the light emitting portion 7, but also the light receiving element 17c, which configures the light receiving portion 17, is provided in the hollow space of the rotor shaft 3. Specifically, the light emitting portion 7, light from which in directions other than the light projection direction is blocked by the light blocking member 9, is provided in the upper portion of the hollow space S of the rotor shaft 3, in the vertical direction, and the light receiving element 17c is provided in the lower end portion of the hollow space S in the vertical direction. Moreover, a curved lens (cylindrical lens) 19 is held integrally with the rotor yoke 4 above the rotor shaft 3. In the present embodiment, a reflection mirror or a collection lens is omitted with respect to the light receiving portion 17.

With this, since not only the light emitting portion 7 but also the light receiving portion 17 is housed in the hollow space S of the rotor shaft 3, a reduction in size can be promoted by attaching the optical components in a compact manner within the range of the height in the axial direction of the motor.

### [Fifth Embodiment]

Next, another example of the optical scanning device is described with reference to Fig. 5. The same members as those in the first embodiment are assigned the respective same reference numbers and the description thereof is quoted herein.

In the present embodiment, the light emitting portion 7 is not located inside the rotor shaft 3 but is integrally attached to the upper portion of the rotor yoke 4. Moreover, a curved lens 19 (cylindrical lens) is held integrally with the rotor yoke 4 above the rotor shaft 3. The light emitting portion 7 is located in the center position in the height direction of the curved lens 19 in such a way as to project light toward outside in the radial direction. In the hollow space S of the rotor shaft 3, the light receiving element 17c is provided at the lower end portion of the hollow space S in the vertical direction.

Laser light radiated from the light source 7a linearly passes through the curved lens 19 or passes through a through-hole 19a, which is formed in the curved lens 19, and is then radiated toward outside in the radial direction and thus projected in the range of 360 degrees according to rotation of the rotor 2. Reflected light from an object is reflected by a concave surface portion of the curved lens 19 and is then guided to the hollow space S of the rotor shaft 3 and focused on the light receiving element 17c.

This enables projecting light from the light source 7a toward outside in the radial direction of the rotor 2 and causing reflected light to be reflected by the curved lens 19 in the axial direction and then focused on the light receiving portion 17 provided in the hollow space S of the rotor shaft 3. Accordingly, since an optical path leading from light projection to light reception becomes short, the optical scanning device is unlikely to be affected by disturbance, so that the detection accuracy thereof is improved. Moreover, even if the light blocking member 9 is not provided, such a phenomenon that projected light and received light interfere with each other can be avoided.

While, in each of the above-described embodiments, a case in which projected light radiated from the light source 7a included in the light emitting portion 7 is radiated toward outside in the radial direction while being rotated together with the rotor 2 by the reflection mirror 6 or the curved lens 19 fixed to the rotor yoke 4 by the fixing component 8 has been described, to widely detect surrounding objects, it is desirable to enlarge a scanning range by varying angles of projected light caused by the reflection mirror 6 or the curved lens 19. Specifically, it is desirable that the reflection mirror 6 or the curved lens 19 be provided in such a way as to be able to swing around an axis parallel to the plane of rotation of the rotor 2.

For example, assuming that a configuration illustrated in Fig. 3 to Fig. 17 of JP-A-2012-37832 is applied, the reflection mirror 6 or the curved lens 19 can be configured to swing with a hinge part set as a swinging shaft by forming the reflection mirror 6 or the curved lens 19 from a part of a metallic plate and warping the metallic plate with a piezoelectric element (for example, piezoelectric zirconate titanate (PZT)) provided as an oscillatory source.

Moreover, the radiation angle of the light source 7a of the light emitting portion 7 can be provided in such a way as to be variable, and a tilt mirror having a plurality of reflection surfaces with respective different tilt angles can be attached to the rotor yoke 4 of the motor 1 in such a way as to be able to rotate as the reflection mirror 6. The tilt mirror is of a truncated pyramid shape in which a plurality of (for example, four or more) reflection surfaces with respective different tilt angles are formed. The light source 7a can be supported in such a way as to be able to swing around a swinging shaft with respect to the light blocking member 9, or can be supported by, for example, an elastic member in such a way as to be able to tilt relative to the motor axis direction.

With this, when the reflection mirror 6 is rotationally driven, for example, by transmission of motor drive from the rotor shaft 3 via a gear train, projected light radiated from the light source 7a in the varied light projection directions is reflected by the respective reflection surfaces of the reflection mirror 6 rotating, thus being able to be projected in the radial direction and the axial direction for scanning.

While, in the description of the above-described embodiments, a DC brushless motor is used as the motor 1, another type of motor such as a stepping motor, even with, for example, a brushed motor, can be employed.

## Claims

1. An optical scanning device comprising:
a motor (1) including a rotor (2) which has a rotor shaft (3) with a hollow structure and in which a reflection mirror (6) (17d) having a reflection surface is integrally attached to a rotation center portion of a rotor yoke (4), and a stator (10) which includes a bearing housing (12) that pivotally supports the rotor shaft (3) in such a way as to allow the rotor shaft (3) to rotate; and
optical components including a light source (7a), a light emitting portion (7) that radiates laser light from the light source (7a) onto the reflection mirror (6) in an axial direction with a hollow space (S) of the rotor shaft (3) used as an optical path and projects reflected light toward outside in a radial direction of the rotor (2), and a light receiving portion (17) that causes reflected light reflected from an irradiated object and traveling toward inside in the radial direction of the rotor (2) to be reflected by the reflection mirror (6) in the axial direction and focuses the reflected light on a light receiving element (17c) with the hollow space (S) of the rotor shaft (3) used as an optical path,
wherein at least one of the optical components is located in the hollow space (S) of the rotor shaft (3).

2. The optical scanning device according to claim 1, wherein the light emitting portion (7) is provided at a rotation center of the hollow space (S) of the rotor shaft (3) while light from the light source (7a) in directions other than a light projection direction thereof is blocked by a light blocking member (9).

3. The optical scanning device according to claim 1 or 2, wherein the light receiving portion (17), which includes a light collection lens (18) that collects reflection reflected by the reflection mirror (6) and a light receiving element (17c) on which an image is formed by the light collection lens (18), is provided in the hollow space (S) of the rotor shaft (3).

4. The optical scanning device according to claim 1, wherein the light emitting portion (7) is attached integrally with the rotor yoke (4) in conjunction with a curved lens (19), and the light receiving portion (17) is located in the hollow space (S) of the rotor shaft (3).

5. The optical scanning device according to any one of claims 1 to 4, wherein the reflection mirror (6) is supported in such a way as to be able to swing around a swinging shaft.

6. The optical scanning device according to any one of claims 1 to 4, wherein a radiation angle of the light source (7a) of the light emitting portion (7) is made variable, and the reflection mirror (6) includes a tilt mirror which has a plurality of reflection surfaces with respective different tilt angles and which is integrally attached to the rotor (2) of the motor (1).
